(19) Europäisches Patentamt / European Patent Office / Office européen des brevets

(11) **EP 4 412 448 B1**

(12) **EUROPEAN PATENT SPECIFICATION**

(45) Date of publication and mention
of the grant of the patent:
**29.01.2025 Bulletin 2025/05**

(21) Application number: **23749118.8**

(22) Date of filing: **08.08.2023**

(51) International Patent Classification (IPC):
*A01K 29/00* (2006.01)     *G06Q 50/02* (2024.01)
*G10L 25/66* (2013.01)     *G10L 17/26* (2013.01)

(52) Cooperative Patent Classification (CPC):
**A01K 29/005; G06Q 50/02; G10L 17/26;
G10L 25/66**

(86) International application number:
**PCT/EP2023/071933**

(87) International publication number:
**WO 2024/033361 (15.02.2024 Gazette 2024/07)**

(54) **METHOD AND SYSTEM FOR ASSESSING LIVESTOCK WELFARE BASED ON THE ANALYSIS OF ANIMALS VOCALIZATION AUDIO SIGNALS**

VERFAHREN UND SYSTEM ZUM BEWERTEN DES WOHLBEFINDENS VON VIEH BASIEREND AUF DER ANALYSE VON AUDIOSIGNALEN DER VOKALISATION VON TIEREN

PROCÉDÉ ET SYSTÈME D'ÉVALUATION DU BIEN-ÊTRE DU BÉTAIL BASÉS SUR L'ANALYSE DES SIGNAUX AUDIO DE VOCALISATION DES ANIMAUX

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **09.08.2022 EP 22382773**

(43) Date of publication of application:
**14.08.2024 Bulletin 2024/33**

(73) Proprietor: **Cealvet Slu
43500 Tortosa-Tarragona (ES)**

(72) Inventors:
- **GINOVART PANISELLO, Gerardo José
43500 Tortosa (Tarragona) (ES)**
- **PANISELLO MONJO, Maria Teresa
43500 Tortosa (Tarragona) (ES)**
- **FORMIGA I FANALS, Lluís
17001 Girona (Girona) (ES)**

(74) Representative: **TRBL Intellectual Property
Plaza de Castilla 3, 7°A
28046 Madrid (ES)**

(56) References cited:
CN-A- 109 243 470     CN-A- 109 258 509
KR-A- 20160 142 095     KR-A- 20210 067 779

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**FIELD OF THE INVENTION**

The present invention belongs to the technical field of Precision Livestock Farming (PLF). More specifically, the invention relates to a method for assessing livestock welfare based on the analysis of their vocalization audio signals, and a system for implementing said method.

**BACKGROUND OF THE INVENTION**

In the productive agricultural sector, new technological innovations are continuously developed and integrated to improve and facilitate the farmer's work. Moreover, the increase of world population has led to a growing food demand, with the corresponding need of higher rates of animal production, and the adoption of intensive animal farming techniques based on the rearing of large groups of livestock under confinement. These techniques can sometimes generate unpleasant states in the animals, such as pain, fear, and distress, thus affecting negatively to their welfare.

According to the World Organization for Animal Health, poor animal welfare is associated with reduced animal productivity, longevity, poor meat quality, low reproductive performance, and high prevalence of diseases in herds or flocks. Therefore, improving the technologies for monitoring animal welfare can support a healthier, more comfortable, better nourished, and safer growing, thus leading to higher production rates in the long term. In this context, animal welfare has become a central issue for the scientific community and society, and the demand for more well-being for the farm-raised animals has increased substantially. Administrations have adopted several directives to improve the welfare of farm animals, assuming that they depend on the public concern existing in every country, influencing the policy makers to deepen the actions for that purpose.

In the last years, the combination of modern farming technologies, together with precision engineering, has led to the development of specific technologies for generating real-time information on animal health. The field of these technologies is called Precision Livestock Farming (PLF) and is now used to monitor animals, ensuring their health and well-being. Through the electronic collection of data, its processing and analysis, PLF has the objective and potential of improving production efficiency, reducing costs, and safeguarding animal health. An animal showing excellent health can be the guarantee of product quality, and that is why the PLF is based on the assumption that the continuous and direct monitoring or observation of the animals allows the farmers to detect and control their health status at any given time, and also leading to higher production rates.

Several technologies are currently available to the farmers to measure different parameters on the farm, such as the ventilation rate, feed supply and temperature, among others. The introduction of equipment such as microphones, cameras and sensors (for example, body temperature sensors, or skin conductivity sensors), has managed to focus attention on the protagonists of the production process, i.e. the animals. More recent studies have focused on sound analysis (bioacoustics) of animals vocalization, since the magnitudes derived from this parameter (for instance, frequency or number of vocalizations in a given time period) can provide information about their sex, age, mother and offspring's relationship, if their emotional state is disrupted, or their growth rate. Moreover, the sound monitoring of vocalizations is regarded as a very low invasive process, since it does neither interfere with the animals' activities, nor with the processes of the farm.

Animal vocalizations are thus considered an expression of the welfare of the animals that can be generated spontaneously or, alternatively, be motivated by external events. The study of emotions in animals presents complex structures, including a variate set of acoustic elements, and several studies have analyzed them to disambiguate this complexity. Nevertheless, it is widely accepted that there is a strong correlation between the animal vocalization sounds and their welfare condition. In other studies, the use of sound sensors in the farms to monitor the animal emotions is also combined with other techniques such, for instance, image capturing for facial recognition or movement patterning.

In this context, the sound analysis of animal vocalizations has currently been applied to different species of farm-grown animals, such as cattle, chickens, etc. Under these applications, vocalizations such as screams are usually identified since they are related to pain or stressful situations. Poultry farming and, in particular, broiler farming, is also an area where the development of welfare-monitoring techniques can be very valuable, due to the sheer number of animals involved (up to tens of thousands of individuals in one barn) and their fast growth rate (target weight in just 5-6 weeks or less), as well as the direct relationship to this rate with health problems such as sudden death syndrome, ascites, lameness, and contact dermatitis.

Bioacoustics has been widely tested in poultry farms, especially by means of recorders that automatically gather audio data, either continuously or over specific time periods of the day. Under this approach, some studies have analyzed chicken vocalizations to find patterns related to the age of the birds, and also considering whether the birds are alone or in a group. Other researchers have worked with the distinction of healthy from infected chickens, while others have analyzed acoustic parameters to automatically detect stress in laying hens. Other factors can be considered when evaluating the behavior of birds, like temperature.

Other types of approaches are based on defining a set of acoustic features related to the physical, behavioral, and emotional welfare of birds, called "iceberg indicator", which is obtained after cleaning the spectral frequencies that are especially involved in farm machinery. With the iceberg indicator, several studies have managed to predict low weight gain and mortality for the first days of birds. In these studies, deep learning techniques are used to identify distress calls, as an alternative to the use of manual annotations, which are generally identified as a labor-intensive and time-consuming task.

More recently, several research teams have started to work on the development of vocalization and frequency identification systems, which integrate feature extraction together with machine learning algorithms, in order to identify the vocalizations in a real-operation environment, like a farm. Examples of these systems are patent documents WO 2020/165587 A1, US 8915215 B1, US 8297231 B2 and KR 2021/0067779 A.

In this context recent studies have widened the approach to its application to multiple species (e.g. horses, cows, goats, chickens), even relating distribution of frequencies to positive or negative emotions in farm-grown animals where, in the case of chickens, food calls and fast clucks may be linked to positive emotions. The use of these algorithms allows, for instance, to assess the similarities and differences of the animal vocalizations depending on factors that negatively affect their welfare, such as feed availability (hunger) or parturition (pain), to develop artificial intelligences to automatically identify these situations.

For the general case of birds, several analyses have been conducted with two different groups at the same time, comparing the vocalizations when the animals are fed and when they are not, focusing on their food dependency. Other studies have performed the analysis of the farm acoustic environment to obtain the Equivalent Level ($L_{eq}$), the mean Peak Frequency (PF), and the PF variation, for specified periods, to evaluate other iterations of the growing process in the future and compare its measurements at every stage of the growing process.

Even though the PLF techniques have experienced a substantial development in the last years, there is still a need to further develop improved automated methods in this field, based on the analysis of vocalization audio signals which, on the one hand, allow farmers to address and prevent major animal welfare issues (planning of medical treatments, feeding supplementation, etc.) and, on the other hand, provide better and faster management solutions for higher efficiency and economic profit.

The present invention is aimed at solving the aforementioned problems, by proposing a novel method and system for assessing livestock welfare, especially poultry, based on the combination of selected acoustic features of the livestock vocalization and frequency audio signals.

## BRIEF DESCRIPTION OF THE INVENTION

A first object of the present invention relates to a method for assessing a welfare state of livestock animals, according to any of the embodiments described in the claims. Said method comprises performing the following steps in any technically possible order:

    a) providing one or more livestock animals;
    b) providing a main location for the livestock animal/s;
    c) providing at least one audio sensor device, configured to receive one or more vocalization audio signals emitted by the livestock animal/s at the main location;
    d) providing a data processing unit, configured to process the vocalization audio signal/s, wherein said data processing unit further comprises:

    - a database of vocalization audio signals of the livestock animal/s provided in step a), indicative of a reference welfare condition; and,
    - hardware and/or software means for determining a welfare condition of the livestock animal/s;

    e) measuring, with the audio sensor device, one or more vocalization audio signals generated by the livestock animal/s at the main location;
    f) determining, with the data processing unit, a plurality of acoustic features of the data measured in step e), wherein said acoustic features comprise:

    - at least one of the Mel-Frequency Cepstral Coefficients MFCC3, MFCC4 and MFCC6;
    - the pitch feature; and
    - the number of livestock animal vocalizations per unit of time;

    g) determining, with the data processing unit, one or more livestock animal productive indicators from the acoustic features obtained in step f);

h) comparing, with the data processing unit, the livestock animal productive indicator/s obtained in step g) with the database of the data processing unit and establishing a degree of similarity;

i) determining, with the data processing unit, a welfare state of the livestock animal/s according to the degree of similarity established in step h).

According to the invention, step g) comprises a prediction about how much the livestock animal/s weigh, eat and/or drink, and/or how much their body temperature has changed, and/or what is the carbon dioxide concentration at livestock animals' location for a period between 0 to 10 days from the day the audio sensor device received the livestock animal vocalization audio signal/s. Production cycle day and time is known by the data processing unit to make such predictions. Time '0' means a prediction of the current value of any of the aforementioned livestock animal productive indicators. More preferably, between 0 to 5 days. In this way, livestock animals' owner can not only detect small but significant changes in livestock animal behavioral patterns, but also identify and intervene before the onset of animal clinical illness.

Within the scope of interpretation of the present invention, the acoustic features will comprise the raw values of MFCC3, MFCC4, MFCC6, the pitch feature, and the number of livestock animal vocalizations per unit of time, directly determined with the data processing unit, or the result of any data transformation of said raw values (for instance, average, maximum, minimum, deviation, or frequency of repetition of vocalizations).

Within the scope of interpretation of the present invention, the expression "livestock animal" will be understood as any living creature kept or raised for consumption, provide labor, and/or produce commodities (meat, eggs, milk, fur, leather, wool, etc.), including those still inside their egg (i.e., before hatching). Examples of livestock animals are broiler chickens, laying hens, roasters, chicks, turkeys, ducks, cows, sheep, lambs, goats, pigs, horses, donkeys, mules, and hen fertilized eggs.

Furthermore, the expression "livestock animal productive indicator" will be understood as any characteristic of a livestock animal or any external parameter which contribute directly to the welfare state of said animal and, consequently, to their value for commercial purposes, like, for example, body weight, feed intake, water consumption, body temperature, or carbon dioxide concentration at livestock animals' location.

In a preferred embodiment of the invention, the main location provided in step b) comprises a farm, a barn, a hatchery, or means for animal transportation; preferably, a truck, a train, a ferry, or an airplane.

In yet another preferred embodiment of the invention, said method further comprises:

- providing a secondary location for the livestock animal/s;
- performing steps c) to i) at said secondary location;
- comparing the welfare state of the livestock animal/s at the main and secondary locations.

This method is considered advantageous over the prior art, even without the limitation to specific acoustic features.

In yet another preferred embodiment of the invention, the one or more livestock animals provided in step a) comprise fertilized eggs, preferably, poultry chicken fertilized eggs, and step e) comprises measuring one or more vocalization signals generated by the livestock animals before or after said animals are born from the fertilized eggs. More preferably, the main location provided in step b) comprises an incubator, and the method of the invention further comprises performing the following steps:

- placing the fertilized eggs inside the incubator; and
- opening the incubator according to the welfare state determined in step i).

In this way, farmer can monitor birds prior to hatching without being physically present in the barn and adjust temperature, humidity and/or egg turning to guarantee a correct development of chick embryos. This method is considered advantageous over the prior art, even without the limitation to specific acoustic features.

In yet another preferred embodiment of the invention, the audio sensor device provided in step c) comprises a microphone or audio recording means connected to or comprising a microphone.

In yet another preferred embodiment of the invention, said method further comprises filtering and/or denoising the livestock animal vocalization audio signals before step f).

In yet another preferred embodiment of the invention, said method further comprises providing an auxiliary sensor device for measuring carbon dioxide concentration, humidity, ammonia concentration, light intensity and/or color temperature, and measuring said magnitude/s at the main and/or secondary location/s. In this way, the method of the invention allows farmers to correlate any change on these environmental magnitudes with livestock animal's welfare and, therefore, to take better and faster corrective actions to guarantee animal well-being while maximizing productivity and profit.

In yet another preferred embodiment of the invention, the livestock animal/s provided in step a) is/are under a pharmacological treatment. This method is considered advantageous over the prior art, even without the limitation to specific acoustic features.

A second object of the present invention relates to a system for assessing a welfare state of one or more livestock animals according to any of the embodiments described in the claims. Advantageously, said system comprises:

- at least one audio sensor device, configured to receive one or more vocalization audio signals emitted by the livestock animal/s at a main location;
- a data processing unit, configured to process the vocalization audio signal/s, wherein said data processing unit further comprises:

  - a database of vocalization audio signals of the livestock animals, indicative of at least a reference welfare condition; and,
  - hardware and/or software means for determining at least a welfare condition of the livestock animal/s;

and wherein the audio sensor device and the hardware and/or software means of the data processing unit are further adapted to perform at least steps e)-i) of a method according to any of the embodiments described in the present document.

In a preferred embodiment of the system of the invention, said system further comprises a data communication network, and/or an auxiliary sensor device for measuring carbon dioxide concentration, humidity, ammonia concentration, light intensity and/or color temperature at the main and/or secondary location/s. Said data communication network is connected to the data processing unit and further comprises:

- one or more management terminals, configured to further postprocess or manage the vocalization audio signal/s processed by the data processing unit; and/or
- one or more user terminals, configured to send instructions to the data processing unit and adapted to display and/or download the livestock animal productive indicator/s, the comparison between said indicator/s and the database of the data processing unit, and/or the welfare state of the livestock animal/s determined by the data processing unit. Said user terminal may comprise a desktop, web, or mobile application.

## BRIEF DESCRIPTION OF THE DRAWINGS

While aspects of the subject matter of the present disclosure may be embodied in a variety of forms, the following detailed description and accompanying drawings are merely intended to disclose some of these forms as specific examples of the subject matter. Accordingly, the subject matter of this disclosure is not intended to be limited to the forms or embodiments so described and illustrated.

Figure 1 shows a system for assessing livestock welfare based on the frequency analysis of vocalization audio signals, according to a preferred embodiment of the invention.

Figure 2 shows a data communication network connected to the system of the invention, according to a preferred embodiment thereof.

Figure 3a shows the concentration of carbon dioxide, $[CO_2]$, inside a broiler poultry farm during three consecutive poultry production cycles (AA, AB, and AC) metered at the same farm. Figure 3b shows box plots of the $CO_2$ concentration inside a broiler poultry farm during each of said poultry production cycles filtered in time intervals of 0-14 (dark gray box plots), 15-28 (light gray box plots), and 29-40 days (white box plots), according to a preferred embodiment of the invention's method.

Figure 4a shows the spectrum, Zero Crossing Rate (ZCR), and temporal waveform of raw data. Figure 4b shows the spectrum, ZCR, and temporal waveform of filtered data, according to a preferred embodiment of the invention's method.

Figure 5 shows MFCC6 feature tendency per day and attribute data, plotted in box plots per production cycle and time interval, for a preferred embodiment of the invention based on the prediction of $CO_2$ concentration inside a broiler poultry farm. Similar behavior is observed for other livestock animal productive indicators predictions.

Figure 6 shows MFCC4 feature tendency per day and attribute data, plotted in box plots per production cycle and time interval, for a preferred embodiment of the invention based on the prediction of $CO_2$ concentration inside a broiler poultry farm. Similar behavior is observed for other livestock animal productive indicators predictions.

Figure 7 shows MFCC3 feature tendency per day and attribute data, plotted in box plots per production cycle and time interval, for a preferred embodiment of the invention based on the prediction of $CO_2$ concentration inside a broiler poultry farm. Similar behavior is observed for other livestock animal productive indicators predictions.

Figure 8 shows pitch feature tendency per day and attribute data, plotted in box plots per production cycle and time interval, for a preferred embodiment of the invention based on the prediction of $CO_2$ concentration inside a broiler poultry farm. Similar behavior is observed for other livestock animal productive indicators predictions.

Figure 9 shows number of vocalizations per day and attribute data, plotted in box plots per cycle and interval, for a preferred embodiment of the invention based on the prediction of $CO_2$ concentration inside a broiler poultry farm. Similar behavior is observed for other livestock animal productive indicators predictions.

Figure 10 shows the variation of (a) chicks' number of vocalizations, (b) pitch frequency, and (c) MFCC3 with respect to $CO_2$ concentration inside a truck.

Figure 11 shows broiler chicken weights predictions obtained following the method of the invention during six complete poultry production cycles in comparison with the values measured with a scale.

Figure 12 shows welfare detection in a hatchery following the method of the invention based on the acoustic features pitch feature (Figure 12a) and number of vocalizations per production cycle day (Figure 12b).

Figure 13 compares the chick's rectal temperature manually measured with a thermometer (black line) and the predicted ones calculated by the method of the invention (dashed line).

Numerical references used in the drawings

(1) Audio sensor device
(2) Data processing unit
(3) Housing
(4) Preamplifier
(5) Current stabilizer
(6) Energy supply means
(7) Visual signaling means
(8) Data communication ports
(9) Data communication network
(10) Routers
(11) Internet
(12) Servers
(13) Management terminals
(14) User terminals

**DETAILED DESCRIPTION OF THE INVENTION**

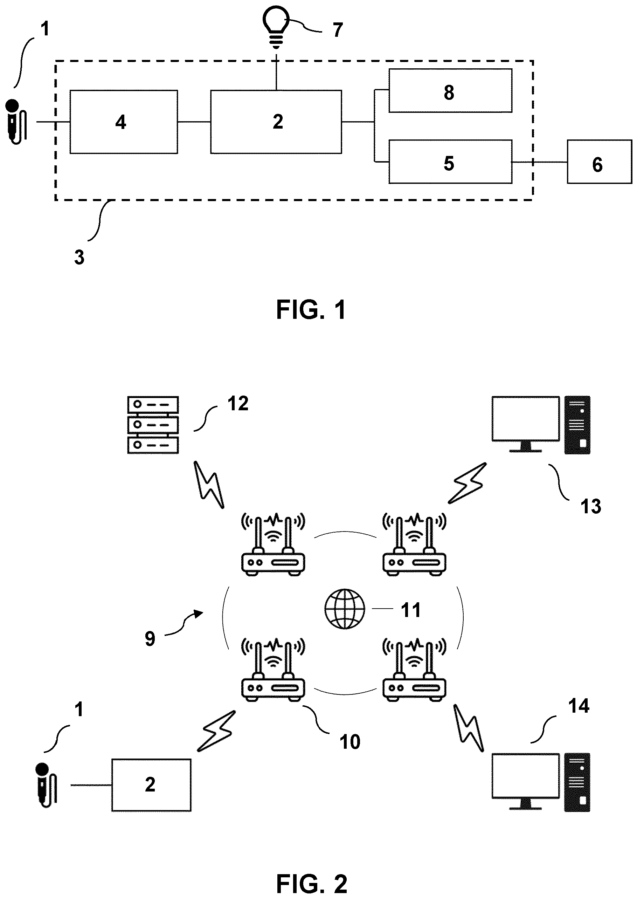

As described in precedent sections, the present invention proposes a method for assessing livestock animal welfare based on the frequency and temporal domain analysis of their vocalization audio signals, and a system for implementing said method. The method and the system can be applied to one or more livestock animals and, preferably, to a plurality of broiler chickens located at a barn, a hatchery, or means for animal transportation (i.e., a truck, a train, a ferry, or an airplane).
The birds take about six weeks to go from hatching to finished weight and stressful condition states can retard their growth, reducing their value when they go to market as well as egg quality (number, weight, shell thickness, egg specific gravity, and albumen weight and thickness). As broiler chickens are very vocal species that express different conditions through their calls (warning, alarm, social contact, territorial, laying, nesting, mating, threat, submissive, distress, fear, contentment, food, battle cries, time calls, etc.), the method and the system of the invention allow to measure such audio signals by means of an audio sensor device (1), which is comprised in the system of the invention as shown, as a non-limiting example, in Figure 1 of the present document. Under this embodiment, the system comprises an audio sensor device (1) equipped with, preferably, a microphone configured to receive one or more vocalization audio signals generated by the livestock animal/s at a main location of the farm; and a data processing unit (2), configured to process the data from the audio sensor device (1).

In a preferred embodiment, the audio sensor device (1) comprises one or more omnidirectional measurement microphones which can be arranged at the center and/or on the walls of a main location, for example in a breeding shed of a farm. In different embodiments of the system, the audio sensor device (1) can be also configured with audio recording means, and/or audio filtering means.

Typically, the data processing unit (2) will be protected by a housing (3), for example an IP-65 electrical protection box. Inside the box, other components of the system can be also arranged, such as, preferably, a microphone preamplifier (4), and/or a current stabilizer (5) connected to an energy supply means (6), such as a battery or the general power grid. The housing (3) can be further adapted with visual signaling means (7) (for example, comprising LED indicators) to indicate if the system is active. In further embodiments of the invention, the system can further comprise one or more data communication ports (8) to receive, send and/or extract data, such as, for instance, a Wi-Fi connection port or an Ethernet connection port.

In a preferred embodiment of the invention, the data processing unit (2) comprises hardware and/or software means adapted to read the information received by the audio sensor device (1), preferably of samples configured over specified periods of time (for example, in time windows of 1-6 seconds). Said means can comprise any general-purpose input/output (GPIO) computer or processor, any single board computing unit, such as, for instance, a Raspberry PI device, any bare-metal microcontroller, or any other computing means adapted to perform the essential steps of the claimed method. At the same time, the data from each of these periods of time is processed and a set of acoustic features derived from the audio signals is calculated with the computer. In a preferred embodiment of the invention, the calculated results are generated for a desired frequency and stored as temporal data for given storing periods (for example, of 10-20 minutes). The data samples can be temporally stored in a RAM memory of the computer, where predictions are made for a set of magnitudes related to the welfare of the animals. Optionally, a set of post-filtering means can also be applied to the prediction results (for example, for identifying glitch audio signals due to external sounds sources processed by the system).

In a preferred embodiment of the invention, the calculations of the acoustic features are conducted by the data processing unit (2) and then sent to a data communication network (9) through the data communication ports (8), as shown in Figure 2 in a non-limiting example of the system. The data communication network (9) can further include one or more routers (10) connected to the internet (11), one or more data servers (12) (preferably configured with one or more databases, either locally or cloud-based), one or more management terminals (13) (where the processed data can be further postprocessed or managed as desired), and one or more user terminals (14) (where the final users of the system can access the processed welfare information and prediction values).

In a preferred embodiment of the invention, the acoustic features are calculated in the data processing unit (2), following an edge computing approach. This is considered advantageous compared to remote calculations, since normally data connection in the farms is limited to narrow bandwidths, thus taking it longer to send, calculate, and/or receive the processed data though the internet (11). However, other embodiments of the invention can comprise a remote calculation of the welfare predictors.

Once the vocalization audio signals are received by the audio sensor device (1), at least three types of acoustic features are calculated by the data processing unit (2):

- at least one of the third, fourth and sixth Mel-Frequency Cepstral coefficients MFCC3, MFCC4 and MFCC6, which are frequency features that indicates the amount of energy compressed in a frequency region using a linear cosine transform of a log power spectrum on a nonlinear Mel scale of frequency;
- the pitch feature, which is the fundamental frequency on what a bird vocalizes; and
- the number of vocalizations per unit of time.

In a preferred embodiment of the invention, the data processing unit (2) further comprises a database of poultry birds vocalization signals, indicative of a reference welfare condition.

This database will advantageously encode the knowledge of audio signals obtained for a period of time (typically months or years), and their relationship with the welfare of the monitored animals. This database can comprise raw data, or a training model (local or cloud-based) according to a machine-learning or an artificial intelligence algorithm, which can also be fed and improved by the actual data obtained by the system. In this way, the system can be further optimized in time, so as to obtain more precise welfare predictors according to the animals' conditions, farm conditions, environmental conditions, seasonal or weather conditions, etc.

From the calculated acoustic features, one or more livestock animal productive indicators are predicted, wherein said productive indicators comprise, preferably, an instant or short time forecast of animal body weight, feed intake, water consumption, body temperature, and/or carbon dioxide concentration at animal's location. More preferably, for the case of poultry birds' monitoring, a forecast between 0 to 10 days from the day the audio sensor device receives the bird's vocalization signals is considered advantageous and, even more preferably, between 0 to 5 days.

Then, the calculated productive indicators are compared with those obtained from the database of poultry birds vocalization signals or evaluated with the artificial intelligence training models, determining a welfare state of the birds according to the degree of similarity obtained. In this way, the method of the invention allows farmers to monitor and control birds' welfare in a non-invasive and continuous way at any given time, taking better and faster corrective actions to guarantee animal well-being and high-quality products (i.e., meat and eggs) while maximizing productivity and profit. These corrective actions can include, without limitation, supplying or withdrawing a medical treatment, providing or withdrawing feeding supplementation, and/or increasing or reducing ventilation rate at birds' location (either in a barn, hatchery, or transport truck).

Optionally, the method of the invention can comprise filtering and/or denoising the birds vocalization audio signals. Farmer management daily operations and machinery sounds (fans, feeders, drinkers, sound vibrations of the bar of the feeders, etc.) are the main causes of noisy vocalization audio signals and, therefore, noisy acoustic features. Additional filtering can be applied after determining said acoustic features to remove further sound glitches or background noise effects.

The method of the invention also allows farmers to guarantee the welfare state of the birds sold to a customer, both prior and during transportation. In this case, the aforementioned steps are reproduced inside birds' transport means (secondary location), typically a truck, and the welfare state of the chickens at both locations is compared. In this way, farmers guarantee the quality of their products upon arrival to customer place. The use of a system according to the invention for monitoring the transportation of animals is considered advantageous over the prior art, even without the limitation to specific acoustic features.

Finally, the method of the invention can be used to monitor and control chicks hatching, without being physically present in the hatchery. In this case, a plurality of fertilized eggs is placed inside an incubator, and the audio sensor device (1) will receive vocalization audio signals from birds, either inside the egg or already born. The incubator will be open depending on the welfare state determined by the method of the invention. In this way, farmer can adjust temperature, humidity and/or egg turning to guarantee a correct development of chick embryos. The use of a system according to the invention for monitoring a hatchery is considered advantageous over the prior art, even without the limitation to specific acoustic features.

As further non-limiting embodiments of said method and system, several examples of application will be provided, as follows.

Example 1: Analysis of acoustic features of vocalizations related to carbon dioxide concentration in broiler poultry farms.

Data were collected from two commercial broiler farms located in the same area, with similar weather conditions and during a period of eight months. The farms had a high level of automation in their management routines and, therefore, they had a low level of man-made noise. Farm A had a livestock production of 42,000 animals and three production cycles which were separately recorded. Farm B had a capacity of 80,000 chicken birds and one production cycle which was also recorded. Both farms had a similar flock management and diets according to the industrial requirements and each cycle had a duration between 42 to 44 days, depending on the final animal weight and the integrator needs. In all the cycles recorded, the first 40 days of animal life were studied, with unrestricted access to food, water supply and free mobility for the chicks.

The audio sensor devices (1) used for data acquisition comprised a carbon dioxide sensor and a microphone. Acoustic data from each animal breeding cycle was uninterruptedly collected with the microphone, which was positioned centrally to the animal house at a height of, substantially, 0.7 m. The analogical signal obtained by the microphone was digitalized with a digital audio interface and recorded in the data processing unit (2) by means of recording hardware housed in an IP 65 junction box, hanging on a wall close to the microphone. The system was recording for 40 days with a sampling frequency of 22.05 kHz and 8 bits resolution, splitting data in 10-minute files with a FLAC ("Free Lossless Audio Codec") compression. Simultaneously, the carbon dioxide sensor was located at the center of the farm A, at a height of substantially 0.8 m from the ground, and samples were obtained in intervals of 15 minutes.

Carbon dioxide ($CO_2$) is an acidic colorless gas, mostly emitted by birds and litter. The gas production capacity by the animals depends on animal weight and animal performance as a result of animal metabolism. $CO_2$ is an important parameter to measure and control within the PLF field, as it acts as a tracer gas to determine the ventilation rates of the house, and to determine when actions are required to reduce high concentrations of $CO_2$ particles breathed by birds. Therefore, an accurate study of the acoustical feature of the farm sounds is important to understand and describe the features related with the $CO_2$ concentration. These indicators can be used as a warning signal for the farmer about the need to increase or not the ventilation rate inside the farm to ensure maximum animal well-being.

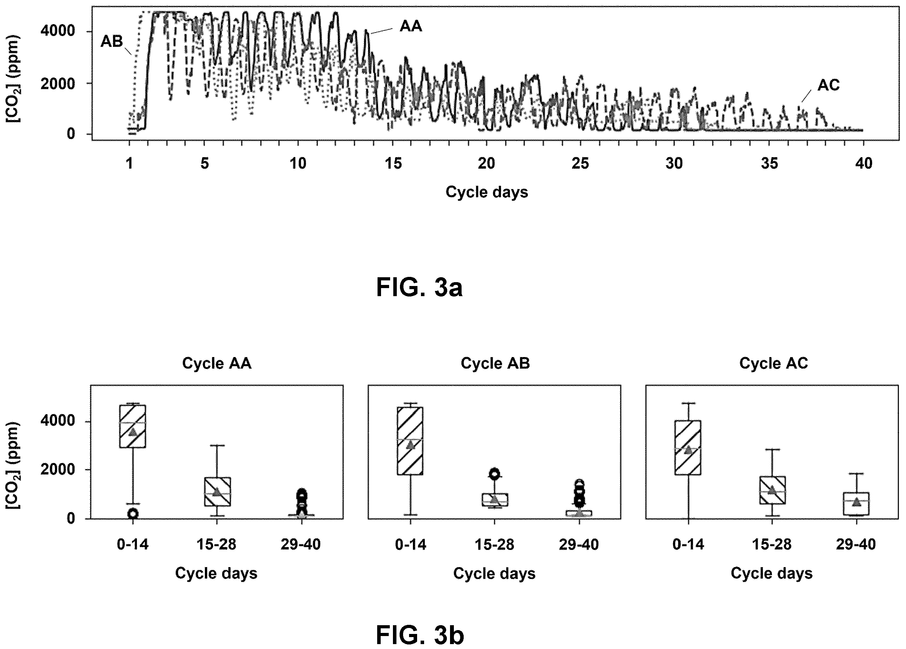

Figure 3a shows the concentration of $CO_2$ in ppm inside the broiler poultry farm during three consecutive winter production cycles (AA, AB, and AC). Figure 3b shows a box plot of the $CO_2$ concentration inside the broiler poultry farm during each of said poultry production cycles filtered at three different time intervals. Said time intervals represent the starter (0-14 days; dark gray box plots), grower (15-28 days; light gray box plots) and finisher (29-40 days; white box plots) typical zoo-technical performance intervals used in the art. The 0-14 days period is the interval with highest mean value (3000-2800 ppm) and variation, the 15-28 days period reduces considerable the mean value of gas concentration (900-1100 ppm) and variation compared to the first interval, and the 29-40 days period comprises minimum gas presence, in comparison with the other intervals. The decreasing curve observed is typical for a winter season, and it is due to farm management where at the beginning of the cycle the house has to maintain constantly to 29 °C to keep chicks warm. Therefore, less ventilation can be performed with external temperatures between 5-15 °C as the house would get cooler and, as a result, increases the gas concentration are expected due to reduced ventilation.

Continuous farm audio recording contains the raw acoustical information related to all the sound sources of the farm emissions from animals, machinery and human handling of animals. Different audio features were extracted once processing the data to study the relationship with $CO_2$. The features extracted and analyzed to obtain the acoustic are detailed below.

Temporal repetitions of birds' vocalizations are an acoustical feature that counts the number of birds' vocalizations per time unit. For this analysis, the period was set to 15 minutes. As disclosed in preceding sections, the number of vocalizations is an indicator of stress, so that high number of repetitions (preferably from 150 to 250 vocalizations per animal in 45 minutes) can indicate a stressful condition of the birds.

The frequency analysis of the vocalizations can be also very useful for finding different welfare patterns. According to a preferred embodiment of the invention, for this study the animal pitch, as well as the third, fourth and sixth Mel-Frequency Cepstral Coefficients (MFCC3, MFCC4, MFCC6) were analyzed.

The pitch feature indicates the fundamental frequency on what the birds vocalize, and it is extracted using a method based on autocorrelation. The chosen Mel-Frequency Cepstral Coefficients (MFCC3, MFCC4, MFCC6) are specific frequency features that indicates the amount of energy compressed in a frequency region using a Mel filter bank. The chosen coefficients cover a range from 0-20 kHz resulted by filtering data with Mel filters, logarithm of the sub-bands and finally applying discrete cosine transform. Even though, in general, any MFCC can be included in the analysis, the inventors have surprisingly found that, for the case of animals' audio signals and, specifically, for poultry birds, the analysis of MFCC3, MFCC4, MFCC6 accounts for at least 30% of the total contribution (importance factor) for predicting the body weight, feed intake, water consumption, body temperature, and/or $CO_2$ consumption of the birds. This property is advantageously used in the present invention to provide with accurate estimates of these magnitudes, while allowing for faster and more scalable calculations of the predictions, since only the most important MFCCs are used within the method, as well as the number of vocalizations and the birds' pitch.

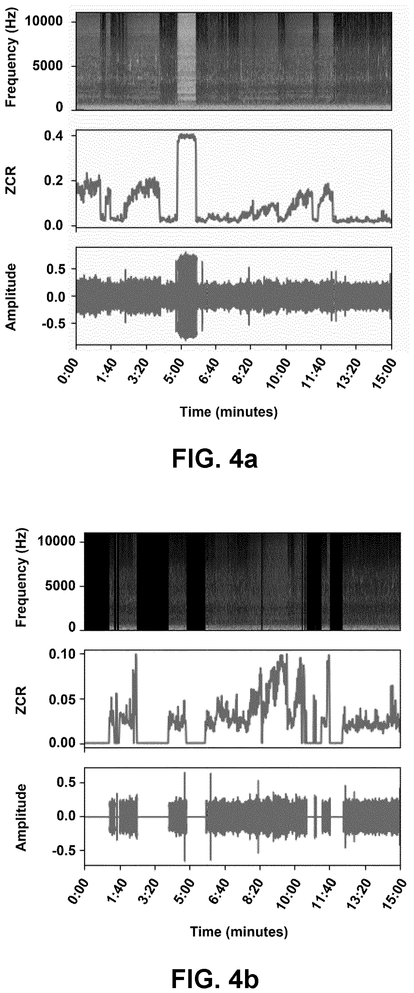

The acoustic features extracted from raw data, in periods of 15 minutes during the entire cycle, showed a considerable deviation between samples of the same day. Also, some of the samples were noisy due to the farmer management routines and the noise of the machinery. In order to suppress these undesired effects, noise-reduction filters were applied to the data. An automatic filter based on a threshold of the Zero Crossing Rate (ZCR) parameter was implemented to discriminate audio samples containing machinery sounds. Figure 4a shows the spectrum, ZCR and temporal waveform of an audio file with noise where the machinery was identified within a spectrum pattern with energy in almost all frequencies and a ZCR superior to 0.10. Figure 4b shows the post-filtering audio data results.

Acoustical features obtained from each audio file filtered can be still noisy to observe tendencies. For those cases, further filters were tested to find the one that reduced wrong values of features due to management noise instead of bird's vocalizations in order to obtain more invariant descriptors between each day and the cycles. The optimal feature filter considered for the study was the one that achieved the minimum Euclidean pitch distance with respect to the same moment of two cycles of the same farm. Having three cycles, the distance was calculated as the sum of distances as described in Equation 1 below:

$$Distance = \sqrt{\sum_{i=1}^{N}(P_{AAi} - P_{ABi})^2} + \sqrt{\sum_{i=1}^{N}(P_{ABi} - P_{ACi})^2} + \sqrt{\sum_{i=1}^{N}(P_{AAi} - P_{ACi})^2}$$

$$(1)$$

Equation 1 calculates the sum of Euclidean distance between three cycles of farm A where P is the filtered pitch value of the corresponding instance i of cycle AA, AB or AC indicated as a subindex, and N is the length of P vector.

The feature importance algorithm (disclosed, for instance, in A. Zien et al., in "Machine Learning and Knowledge Discovery in Databases", Springer Berlin Heidelberg, Berlin, Heidelberg, 2009, pp. 694-709.) provides an estimate of how relevant each attribute is, indicating the level of contribution to a model that extracts some information from the features. This tool is used in the frame of a predictive model and gives, for each used feature, a value from zero to one, which is called the importance factor and that allows to know how useful it is for the model. A combined importance calculated as a mean of the importance of each predictor was obtained through different models predicting the gasses levels. These models have been extracted from the machine learning library Scikit-learn (although any equivalent library or tool can also be used to this aim) and, among them, there logistic regression, decision tree regressor, random forest classifier, and extra trees classifier were used.

After analyzing the combined importance factors relating the acoustical features with $CO_2$ by cycle, as well as aggregating the three cycles, the most important audio descriptor for the prediction of $CO_2$ consumption, with a difference of 0.18 points, is the MFCC6. After this coefficient, MFCC9, MFCC4, MFFC3 were the most relevant ones. All the above-named features, in combination with the number of vocalizations and the pitch frequency, accumulate an importance of more than 0.50, and the combination of MFCC9, MFCC4, and MFFC3 accounted for more than 0.30. Moreover, in further studies related to the body weight, feed intake, water consumption, and body temperature, the inventors have found that the MFCC3, MFCC4, and MFFC6 are always at least among the four most important acoustic features. It was also found that when chicks were stressed, higher values of both the pitch frequency and number of vocalizations were found.

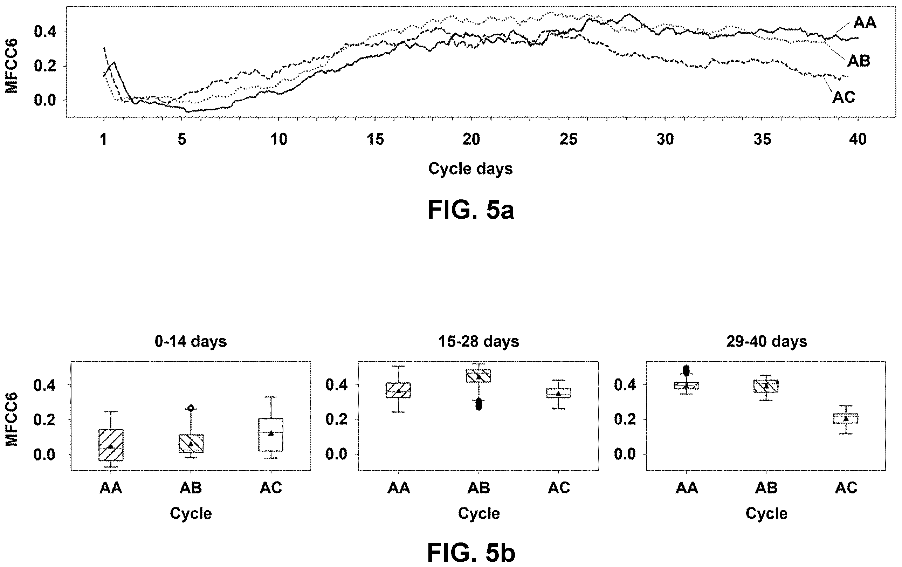

Having the acoustic dataset of the three consecutive poultry production cycles in the same animal house, different farm routines can be simultaneously analyzed to find a tendency on the most related features to $CO_2$ concentration in Figures 5-7. Data in these figures is represented per days at the top, or by intervals shown in box plots at the bottom.

Figure 5a shows the MFCC6 values every 15 minutes at said poultry production cycles AA, AB, and AC, with a tendency of an increasing curve after day two until the twenty fourth day, when it is stabilized. Figure 5b contains data plotted in box plots per poultry production cycle at the time intervals 0-14 days, 15-28 days, and 29-40 days. The Cycle AC (white box plots) has the lowest values with respect to the other cycles in 29-40 days interval. Cycle AA (dark gray box plots) and AB (light gray box plots) have similar means and deviation especially in period 0-14 and 29-40 days.

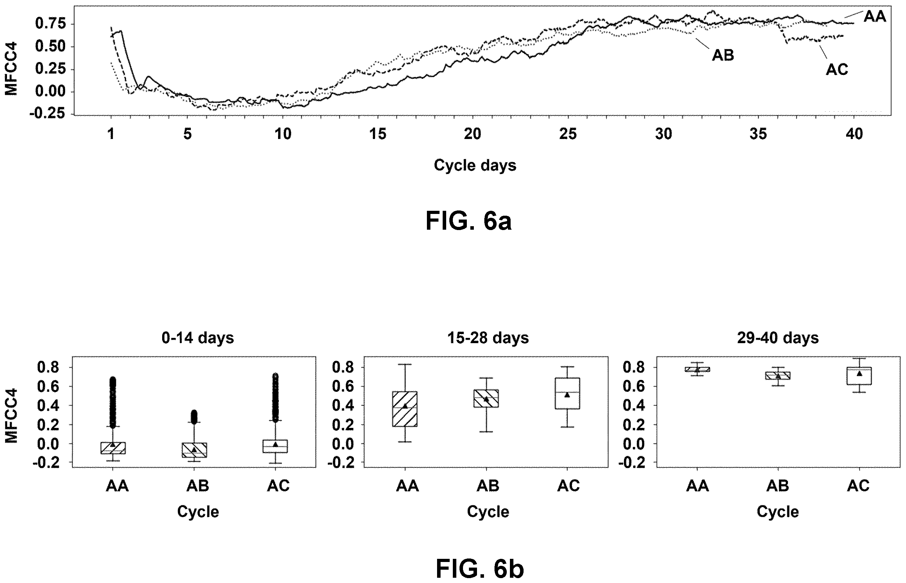

Figure 6a shows the behavior of MFCC4 during the three poultry production cycles AA, AB, and AC. All cycles show a similar MFCC4 tendency: it starts decreasing after the first two days and, since then, starts increasing for the rest of the cycle. Cycle AA is slightly different in the 15-28 days interval. Figure 6b shows that first and last chicks' life's interval have similar mean values between production cycles, and less deviation compared with the 15-28 days period.

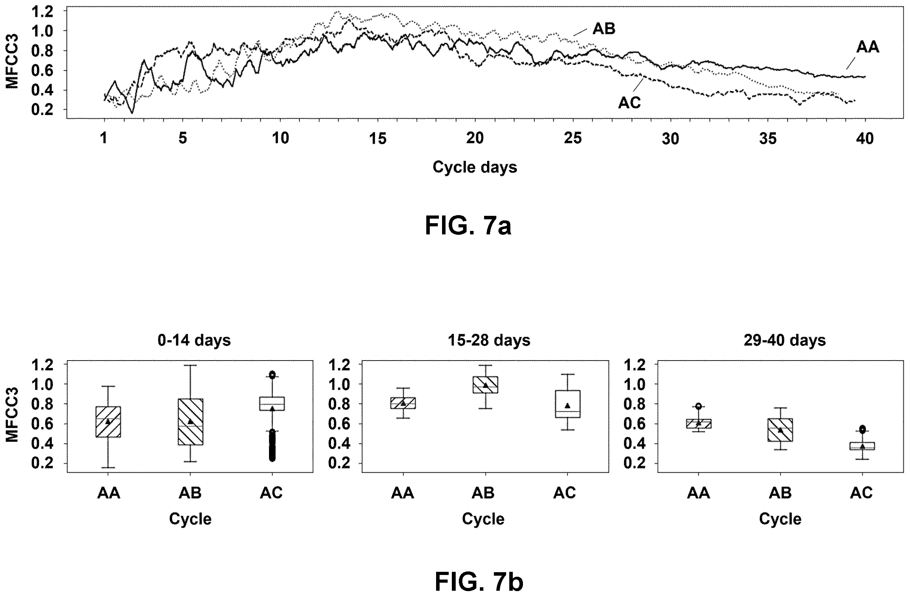

Figure 7a shows how MFCC3 behaves during the three poultry production cycles AA, AB, and AC. Said acoustic feature has an initial growing in the first fourteen days, and then it begins to decline slowly. Figure 7b shows higher feature deviation in first period from 0-14 days compared with the rest of intervals.

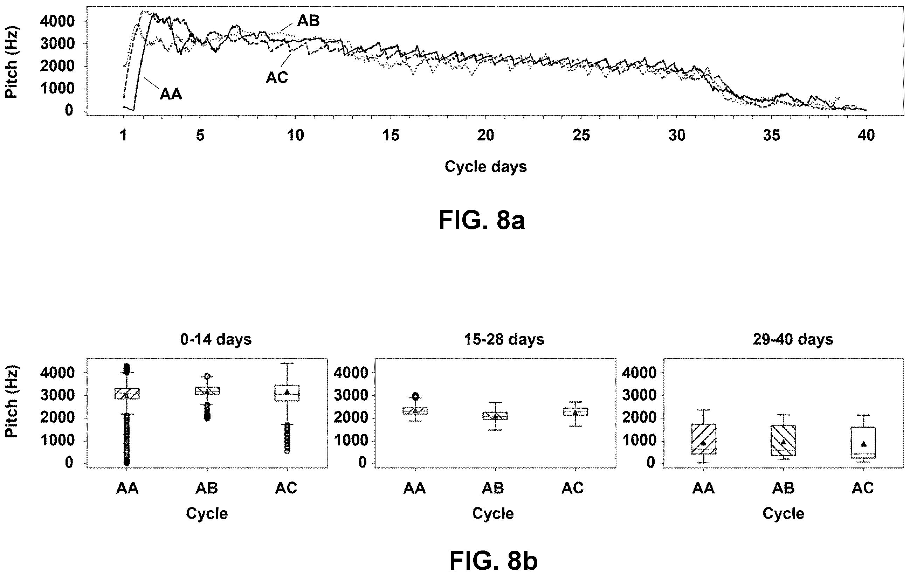

Figure 8a shows how pitch feature behaves during the three poultry production cycles AA, AB, and AC, with tendency of an increasing curve after day two until the twenty fourth day, when it is stabilized. Figure 8b contains data plotted in box plots per poultry production cycle at the time intervals 0-14 days, 15-28 days, and 29-40 days. Last interval of chicks' life present higher feature deviation.

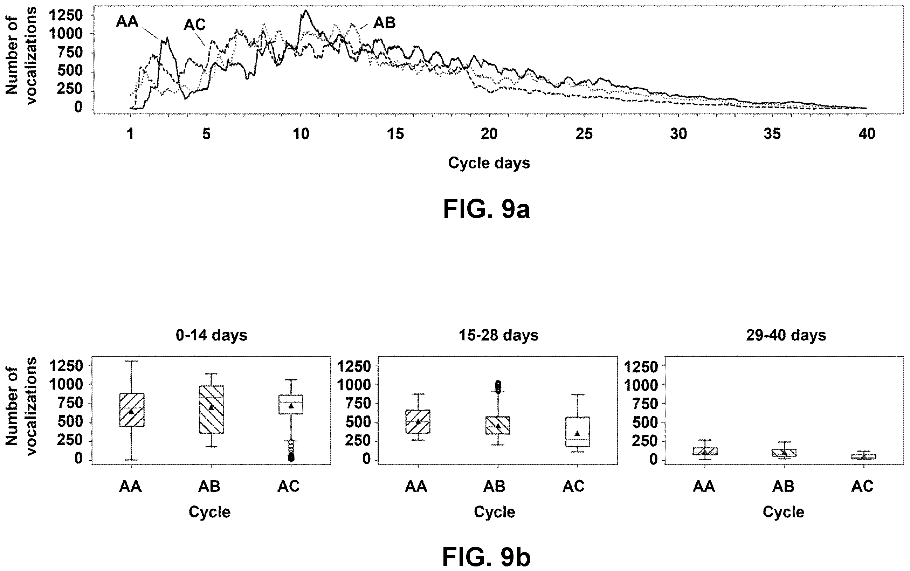

Figure 9a shows the number of vocalizations every 15 minutes at the three poultry production cycles AA, AB, and AC, with tendency of an increasing curve after day two until the twenty fourth day, when it is stabilized and starts to decrease slowly. Figure 9b contains data plotted in box plots per production cycle at the time intervals 0-14 days, 15-28 days, and 29-40 days. Last interval of chicks' life present minimum deviation from mean.

Example 2: Transportation of hatcheries

As disclosed before, the method and system of the invention can also be implemented inside birds' transport means (i.e., in a secondary location compared to the farm), typically inside a truck, a train, or an airplane, and the welfare state of the chickens can be compared with the welfare state of the main location (for example, the farm where the birds are coming from, or a place where the birds are going). In this way, farmers guarantee the quality of their products upon arrival to customer place.

Once the chicks have been removed from the hatcher, sexed and vaccinated, they are placed in boxes for later shipment. Normally, boxes of 100 chicks are used, but this quantity can vary depending on the outside temperature. The boxes can be made of cardboard or plastic based, mainly, on economic criteria. Regardless of the type of box used, it is necessary to have a spongy material at the bottom that can absorb moisture from bird droppings during transport. Once the chicks have been placed in the boxes, they are placed on mobile carts awaiting shipment.

Transport is a very important part to ensure the correct development of the chicks and their viability. During this phase, if carried out properly, there should be no mortality or alteration in the quality of the chicks. The truck must be suitable for the transport of live animals, and preferably equipped with heating, cooling and/or humidification means necessary to ensure adequate conditions for the welfare of the chicks. In particular, to maintain a temperature of about 32 °C inside the box, it is assumed that said means can maintain 24-26 °C between the same boxes, and a relative humidity between 50% and 60%. At all times during transport, any sudden change in temperature should be avoided. On long journeys, especially by rail or plane, when there is no direct monitoring of temperature and humidity by a worker, one or more thermographs should be built into the boxes. This is useful to justify the correct development of the bird or to detect any failure during transport. Trucks must be perfectly closed, ensuring adequate ventilation and air renewal. For this reason, space is always left between the boxes to allow air to circulate, thus facilitating the supply of oxygen to the animals. Under normal conditions, the chick can withstand up to 48 hours of transport without showing obvious signs of deterioration (except weight loss) or increased mortality. During the long hours of transport, the chick consumes the content of the yolk sac through the umbilical route, enough to feed it during its first hours of life. For longer transports, the chicks can be provided, directly in the boxes, with a feed that prevents their dehydration, supplying them with electrolytes, vitamins, and minerals to promote their survival, to prevent or reduce weight loss and to promote growth.

For the above transport means, the use of a system and a method for monitoring the welfare of animals according to the invention is considered advantageous over the prior art, even without any limitation to specific acoustic features, for predicting the bird's body weight, feed intake, water consumption, body temperature, and/or carbon dioxide concentration at animal's location.

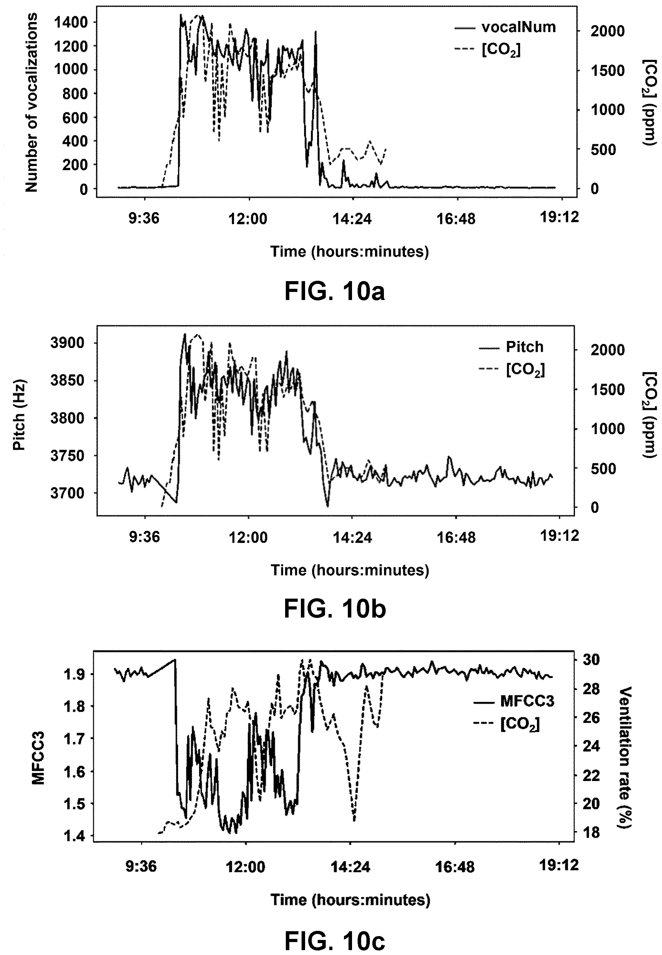

Figure 10a shows chicks number of vocalizations compared to $CO_2$ concentration inside a truck. At higher levels of $CO_2$ inside the truck, the chicks feel worse, and their number of vocalizations increase. The same tendency is observed regarding the pitch frequency (see Fig. 10b). Figure 10c shows that the higher the ventilation of truck, the lower the value of MFCC3, meaning that MFCC3 can be used to determine the effect of the ventilation of the truck in the welfare state of the chicks.

Example 3: Broiler chicken weight predictions compared with weight measured by a scale

Acoustic data and weight measured by a scale were collected from a commercial broiler farm located in the Mediterranean area, at different weather conditions and during a period of two years. For analyzing the weight prediction obtained only from the acoustic features and timestamp data, five cycles have been used as train dataset and evaluated with the remaining cycle. For example, to obtain Absolute Mean Error (AME) of cycle 1, the machine learning algorithm has been trained with cycle 2-6 and tested with cycle 1.

|  | CYCLE 1 | CYCLE 2 | CYCLE 3 | CYCLE 4 | CYCLE 5 | CYCLE 6 | Mean |
|---|---|---|---|---|---|---|---|
| AME (g) | 25,72 | 52,00 | 69,18 | 31,48 | 26,33 | 27,85 | 38,76 |

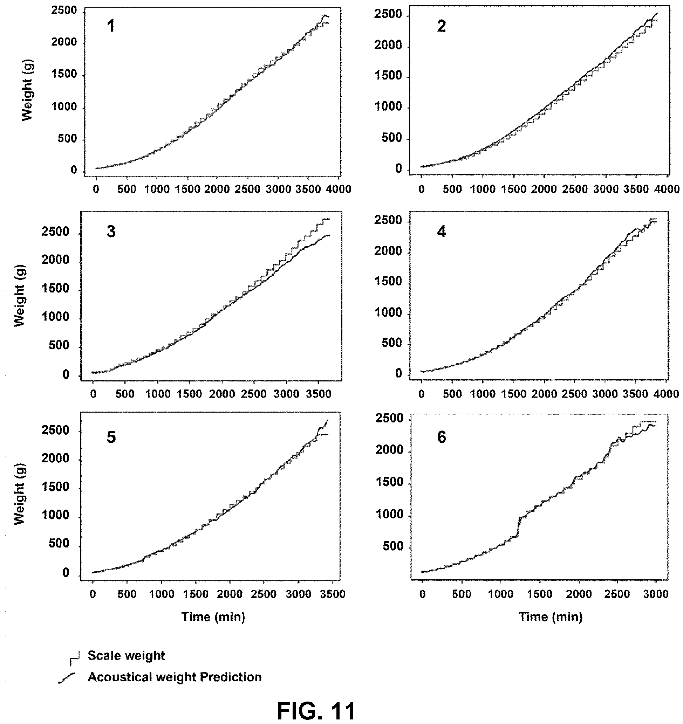

Figure 11 shows broiler chicken weight predicted by the method of the invention during six complete poultry production cycles in comparison with the animal weight obtained using a scale, with an average of absolute mean error of 38.76 g. Advantageously, the method of the invention obtains better results than scales as it is independent of chick gender. From day 29 to 40, male chicks are heavier than females, being less likely to step on the scales due to their greater volume.

Example 4: Broiler chicken welfare status detection in a hatchery

A microphone was placed in the expedition room of a hatchery for six months, collecting vocalizations of the newly hatched chicks every 15 minutes to obtain the average values and deviations of the aforementioned acoustic features according to the method of the invention.

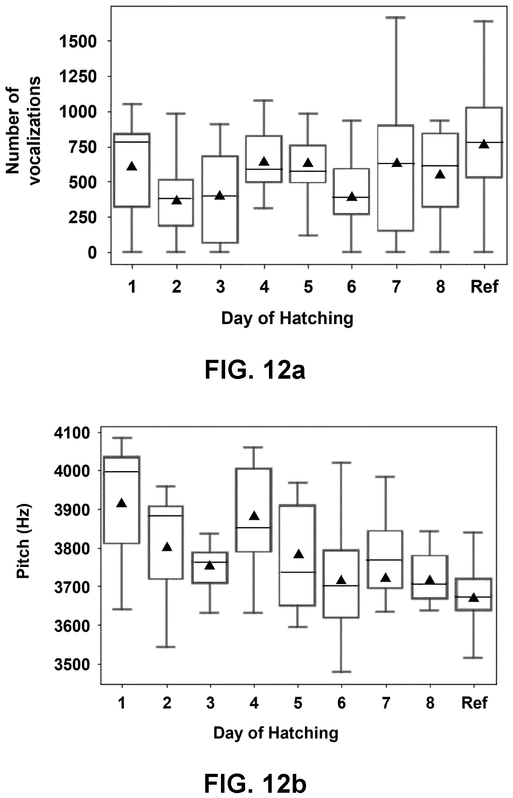

Figure 12a and 12b compare pitch feature values and number of vocalizations for eight days of births in the hatchery calculated by the method of the invention with a 6-month database reference. Distributions higher than the 6-month reference indicate greater levels of animal stress and therefore, a reduction of animal welfare.

Example 5: Chicks' rectal temperature predictions in a hatchery

20 births lasting 6 hours have been recorded acoustically. Four chicks from different areas have been randomly selected every hour and the rectal temperature in Fahrenheit degrees of each has been manually measured with a thermometer.

Of the total dataset created, 80% has been used to train the artificial intelligence model and 20% to test it. The same ML algorithm used to predict weights have been trained to determine the average rectal temperature of each group of animals.

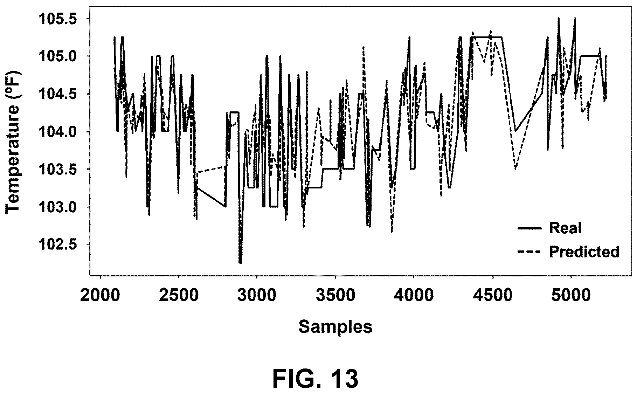

Figure 13 compares the values manually measured with a thermometer (black line) and the predicted ones calculated by the method of the invention (dashed line), observing a high degree of similarity. The average absolute error is ±0.38°F applying the best algorithm.

**Claims**

1. Method for assessing a welfare condition of livestock animals, wherein said method comprises performing the following steps in any technically possible order:

    a) providing one or more livestock animals;
    b) providing a main location for the livestock animal/s;
    c) providing at least one audio sensor device (1), configured to receive one or more vocalization audio signals generated by the livestock animal/s at the main location;
    d) providing a data processing unit (2), configured to process the signals received by the audio sensor device (1), wherein said data processing unit (2) further comprises:

        - a database of vocalization audio sounds of the livestock animal/s provided in step a), indicative of a reference welfare condition; and,
        - hardware and/or software means adapted for determining a welfare condition of the livestock animal/s;

    e) measuring, with the audio sensor device (1), one or more vocalization audio signals generated by the livestock animal/s at the main location;
    f) determining, with the data processing unit (2), a plurality of acoustic features of the data measured in step e), wherein said acoustic features comprise:

        - at least one of the Mel-Frequency Cepstral Coefficients MFCC3, MFCC4 and MFCC6;
        - the pitch feature; and
        - the number of livestock animal vocalizations per unit of time;

    g) determining, with the data processing unit (2), one or more livestock animal productive indicators from the acoustic features obtained in step f);
    h) comparing, with the data processing unit (2), the livestock animal productive indicator/s obtained in step g) with the database of the data processing unit (2) and establishing a degree of similarity;
    i) determining, with the data processing unit (2), a welfare state of the livestock animal/s according to the degree of similarity established in step h).

    and **characterized in that** step g) further comprises a prediction of one or more of the following livestock animal productive indicators for a period between 0 to 10 days: body weight, feed intake, water consumption, body temperature, and/or carbon dioxide consumption.

2. Method according to the preceding claim, wherein the prediction corresponds to a period between 0 to 5 days.

3. Method according to any of the preceding claims, wherein one or more birds, cows, sheep, lambs, goats, pigs, horses, donkeys, or mules are provided in step a).

4. Method according to the preceding claim, wherein one or more broiler chickens, laying hens, or chicks are provided in step a).

5. Method according to any of the preceding claims, wherein the main location provided in step b) comprises a farm, a barn, a hatchery, or means for animal transportation.

6. Method according to the preceding claim, wherein the means for animal transportation comprises a truck, a train, a ferry, or an airplane.

7. Method according to any of the preceding claims, further comprising:

    - providing a secondary location for the livestock animal/s;
    - performing steps c) to i) at said secondary location;
    - comparing the welfare state of the livestock animal/s at the main and secondary locations.

8. Method according to any of the preceding claims, wherein the one or more livestock animals provided in step a) comprise fertilized eggs, and wherein step e) comprises measuring one or more vocalization signals generated by the livestock animals before or after said animals are born from the fertilized eggs.

9. Method according to the preceding claim, wherein the main location provided in step b) comprises an incubator, and said method further comprising the following steps:

- placing the fertilized eggs inside the incubator; and
- opening the incubator according to the welfare state determined in step i).

10. Method according to any of claims 8-9, wherein the fertilized eggs comprise poultry chicken fertilized eggs.

11. Method according to any of the preceding claims, wherein the audio sensor device provided in step c) comprises a microphone or audio recording means connected to or comprising a microphone.

12. Method according to any of the preceding claims, wherein said method further comprises:

- filtering and/or denoising the livestock animal vocalization signal/s before step f); and/or
- providing an auxiliary sensor device, configured to receive carbon dioxide concentration, humidity, ammonia concentration, light intensity and/or color temperature data from the main and/or secondary location/s; and
- measuring, with the auxiliary sensor device, carbon dioxide concentration, humidity, ammonia concentration, light intensity and/or color temperature at the main and/or secondary location/s.

13. Method according to any of the preceding claims, wherein the livestock animal/s provided in step a) is/are under a pharmacological treatment.

14. System for assessing a welfare state of one or more livestock animals, said system comprising:

- at least one audio sensor device (1), configured to receive one or more vocalization audio signals emitted by the livestock animal/s at a main location;
- a data processing unit (2), configured to process the vocalization audio signal/s, wherein said data processing unit further comprises:

- a database of vocalization audio signals of the livestock animals, indicative of a at least a reference welfare condition; and,
- hardware and/or software means for determining at least a welfare condition of the livestock animal/s;

and wherein the audio sensor device (1) and the hardware and/or software means of the data processing unit (2) are further adapted to perform at least steps e)-i) of a method according to any of claims 1-13.

15. System according to the preceding claim, further comprising:

- a data communication network (9), connected to the data processing unit (2), wherein said data communication network (9) further comprises:

- one or more management terminals (13), configured to further postprocess or manage the vocalization audio signal/s processed by the data processing unit (2); and/or
- one or more user terminals (14), configured to send instructions to the data processing unit (2) and adapted to display and/or download the livestock animal productive indicator/s, the comparison between said indicator/s and the database of the data processing unit (2), and/or the welfare state of the livestock animal/s determined by the data processing unit (2);

and/or
- an auxiliary sensor device for measuring carbon-dioxide concentration, humidity, ammonia concentration, light intensity and/or color temperature at the main and/or secondary location/s.

**Patentansprüche**

1. Verfahren zum Beurteilen eines Wohlbefindungszustandes von Nutztieren, wobei das Verfahren das Durchführen der folgenden Schritte in jeder technisch möglichen Reihenfolge umfasst:

a) Bereitstellen eines oder mehrerer Nutztiere;
b) Bereitstellen eines Hauptstandorts für das/die Nutztier(e);
c) Bereitstellen mindestens einer Audiosensorvorrichtung (1), die dazu konfiguriert ist, ein oder mehrere Vokalisationsaudiosignale zu empfangen, die von dem/den Nutztier(en) am Hauptstandort generiert werden;
d) Bereitstellen einer Datenverarbeitungseinheit (2), die dazu konfiguriert ist, die durch die Audiosensorvorrichtung (1) empfangenen Signale zu verarbeiten, wobei die Datenverarbeitungseinheit (2) ferner Folgendes umfasst:

- eine Datenbank mit Vokalisationsaudiotönen des/der in Schritt a) bereitgestellten Nutztiere(s), die einen Referenzwohlbefindungszustand angeben; und
- Hardware- und/oder Softwaremittel, die dazu angepasst sind, einen Wohlbefindungszustand des/der Nutztiere(s) zu bestimmen;

e) Messen eines oder mehrerer Vokalisationsaudiosignale, die durch das Nutztier/die Nutztiere am Hauptstandort generiert werden, mit der Audiosensorvorrichtung (1);
f) Bestimmen einer Vielzahl von akustischen Merkmalen der in Schritt e) gemessenen Daten mit der Datenverarbeitungseinheit (2), wobei die akustischen Merkmale Folgendes umfassen:

- mindestens einen der Mel-Frequenz-Cepstrum-Koeffizienten MFCC3, MFCC4 und MFCC6;
- das Tonhöhenmerkmal; und
- die Anzahl der Nutztiervokalisationen pro Zeiteinheit;

g) Bestimmen eines oder mehrerer Nutztierproduktivitätsindikatoren aus den in Schritt f) erhaltenen akustischen Merkmalen mit der Datenverarbeitungseinheit (2);
h) Vergleichen, mit der Datenverarbeitungseinheit (2), des/der in Schritt g) erhaltenen Nutztierproduktivitätsindikators/Nutztierproduktivitätsindikatoren mit der Datenbank der Datenverarbeitungseinheit (2) und Ermitteln eines Ähnlichkeitsgrads;
i) Bestimmen eines Wohlbefindenszustands des/der Nutztiere(s) mit der Datenverarbeitungseinheit (2) nach dem in Schritt h) ermittelten Ähnlichkeitsgrad,

und **dadurch gekennzeichnet, dass** Schritt g) ferner eine Vorhersage eines oder mehrerer der folgenden Nutztierproduktivitätsindikatoren für einen Zeitraum zwischen 0 und 10 Tagen umfasst: Körpergewicht, Futteraufnahme, Wasserverbrauch, Körpertemperatur und/oder Kohlendioxidverbrauch.

2. Verfahren nach dem vorhergehenden Anspruch, wobei die Vorhersage einem Zeitraum zwischen 0 und 5 Tagen entspricht.

3. Verfahren nach einem der vorhergehenden Ansprüche, wobei in Schritt a) ein oder mehrere Vögel, Kühe, Schafe, Lämmer, Ziegen, Schweine, Pferde, Esel oder Maultiere bereitgestellt werden.

4. Verfahren nach dem vorhergehenden Anspruch, wobei in Schritt a) ein oder mehrere Broiler-Masthähnchen, Legehennen oder Küken bereitgestellt werden.

5. Verfahren nach einem der vorhergehenden Ansprüche, wobei der in Schritt b) bereitgestellte Hauptstandort einen Bauernhof, eine Scheune, eine Brüterei oder ein Mittel zum Tiertransport umfasst.

6. Verfahren nach dem vorhergehenden Anspruch, wobei das Mittel zum Tiertransport einen Lastwagen, einen Zug, eine Fähre oder ein Flugzeug umfasst.

7. Verfahren nach einem der vorhergehenden Ansprüche, ferner Folgendes umfassend:

- Bereitstellen eines sekundären Standorts für das/die Nutztier(e);
- Durchführen der Schritte c) bis i) an dem sekundären Standort;
- Vergleichen des Wohlbefindenszustands des/der Nutztiere(s) an dem Haupt- und dem sekundären Standort.

8. Verfahren nach einem der vorhergehenden Ansprüche, wobei das eine oder die mehreren in Schritt a) bereitgestellten Nutztiere befruchtete Eier umfassen und wobei Schritt e) das Messen eines oder mehrerer Vokalisierungssignale umfasst, die durch die Nutztiere generiert werden, bevor oder nachdem die Tiere aus den befruchteten Eiern schlüpfen.

9. Verfahren nach dem vorhergehenden Anspruch, wobei der in Schritt b) bereitgestellte Hauptstandort einen Inkubator umfasst und das Verfahren ferner die folgenden Schritte umfasst:

- Platzieren der befruchteten Eier in dem Inkubator; und
- Öffnen des Inkubators nach dem in Schritt i) bestimmten Wohlbefindenszustand.

10. Verfahren nach einem der Ansprüche 8-9, wobei die befruchteten Eier befruchtete Eier von Zuchthennen umfassen.

11. Verfahren nach einem der vorhergehenden Ansprüche, wobei die in Schritt c) bereitgestellte Audiosensorvorrichtung ein Mikrofon oder ein Audioaufzeichnungsmittel umfasst, das mit einem Mikrofon verbunden ist oder dieses umfasst.

12. Verfahren nach einem der vorhergehenden Ansprüche, wobei das Verfahren ferner Folgendes umfasst:

- Filtern und/oder Entrauschen des/der Vokalisationssignals/-signale des Nutztiers vor Schritt f); und/oder
- Bereitstellen einer Hilfssensorvorrichtung, die dazu konfiguriert ist, Daten zur Kohlendioxidkonzentration, Feuchtigkeit, Ammoniakkonzentration, Lichtintensität und/oder Farbtemperatur von dem/den Haupt- und/oder sekundären Standort/Standorten zu empfangen; und
- Messen von Kohlendioxidkonzentration, Feuchtigkeit, Ammoniakkonzentration, Lichtintensität und/oder Farbtemperatur an dem/den Haupt- und/oder sekundären Standort/Standorten mit der Hilfssensorvorrichtung.

13. Verfahren nach einem der vorhergehenden Ansprüche, wobei das/die in Schritt a) bereitgestellte(n) Nutztier(e) einer pharmakologischen Behandlung unterzogen wird/werden.

14. System zum Beurteilen eines Wohlbefindungszustandes eines oder mehrerer Nutztiere, wobei das System Folgendes umfasst:

- mindestens eine Audiosensorvorrichtung (1), die dazu konfiguriert ist, ein oder mehrere Vokalisationsaudiosignale zu empfangen, die von dem/den Nutztier(en) am Hauptstandort emittiert werden;
- eine Datenverarbeitungseinheit (2), die dazu konfiguriert ist, das/die Vokalisationsaudiosignal(e) zu verarbeiten, wobei die Datenverarbeitungseinheit ferner Folgendes umfasst:

- eine Datenbank mit Vokalisationsaudiosignales der Nutztiere, die mindestens einen Referenzwohlbefindungszustand angeben; und
- Hardware- und/oder Softwaremittel zum Bestimmen mindestens eines Wohlbefindungszustandes des/der Nutztiere(s);

und wobei die Audiosensorvorrichtung (1) und die Hardware- und/oder Softwaremittel der Datenverarbeitungseinheit (2) ferner dazu angepasst sind, mindestens die Schritte e)-i) eines Verfahrens nach einem der Ansprüche 1-13 durchzuführen.

15. System nach dem vorhergehenden Anspruch, ferner Folgendes umfassend:

- ein Datenkommunikationsnetzwerk (9), das mit der Datenverarbeitungseinheit (2) verbunden ist, wobei das Datenkommunikationsnetzwerk (9) ferner Folgendes umfasst:

- ein oder mehrere Verwaltungsendgeräte (13), die dazu konfiguriert sind, das/die durch die Datenverarbeitungseinheit (2) verarbeitete(n) Vokalisationsaudiosignal(e) weiter nachzubearbeiten oder zu verwalten; und/oder
- ein oder mehrere Benutzerendgeräte (14), die dazu konfiguriert sind, Anweisungen an die Datenverarbeitungseinheit (2) zu senden, und angepasst sind, um den/die Nutztierproduktivitätsindikator(en), den Vergleich zwischen dem/den Indikator(en) und der Datenbank der Datenverarbeitungseinheit (2) und/oder den durch die Datenverarbeitungseinheit (2) bestimmten Wohlbefindungszustand des/der Nutztiere(s) anzuzeigen und/oder herunterzuladen;
und/oder

- eine Hilfssensorvorrichtung zum Messen von Kohlendioxidkonzentration, Feuchtigkeit, Ammoniakkonzentration, Lichtintensität und/oder Farbtemperatur an dem/den Haupt- und/oder sekundären Standort/-Standorten.

## Revendications

1. Procédé d'évaluation d'un état de bien-être d'animaux de bétail, dans lequel ledit procédé comprend la réalisation des étapes suivantes dans tout ordre techniquement possible :

   a) fournir un ou plusieurs animaux de bétail ;
   b) fournir un emplacement principal pour l'animal/les animaux de bétail ;
   c) fournir au moins un dispositif de capteur d'audio (1), configuré pour recevoir un ou plusieurs signaux audio de vocalisation générés par l'animal/les animaux de bétail dans l'emplacement principal ;
   d) fournir une unité de traitement de données (2), configurée pour traiter les signaux reçus par le dispositif de capteur d'audio (1), dans lequel ladite unité de traitement de données (2) comprend en outre :

   - une base de données de sons d'audio de vocalisation de l'animal/des animaux de bétail fournis dans l'étape a), indicative de un état de bien-être de référence ; et,
   - des moyens matériels et/ou logiciels adaptés pour déterminer un état de bien-être de l'animal/des animaux de bétail ;

   e) mesurer, avec le dispositif de capteur d'audio (1), un ou plusieurs signaux audio de vocalisation générés par l'animal/les animaux de bétail dans l'emplacement principal ;
   f) déterminer, avec l'unité de traitement de données (2), une pluralité de caractéristiques acoustiques des données mesurés dans l'étape e), dans lequel lesdites caractéristiques acoustiques comprennent :

   - au moins l'un des coefficients cepstraux des fréquences de Mel MFCC3, MFCC4 et MFCC6 ;
   - la caractéristique tonale ; et
   - le nombre de vocalisations d'animal de bétail par unité de temps ;

   g) déterminer, avec l'unité de traitement de données (2), un ou plusieurs indicateurs de productivité d'animal de bétail à partir des caractéristiques acoustiques obtenues dans l'étape f) ;
   h) comparer, avec l'unité de traitement de données (2), l'indicateur/les indicateurs de productivité d'animal de bétail obtenu(s) dans l'étape g) avec la base de données de l'unité de traitement de données (2) et établir un degré de similarité ;
   i) déterminer, avec l'unité de traitement de données (2), un état de bien-être de l'animal/des animaux de bétail en fonction du degré de similarité établi dans l'étape h).

   et **caractérisé en ce que** l'étape g) comprend en outre une prédiction d'un ou plusieurs des indicateurs de productivité d'animal de bétail suivants pendant une période comprise entre 0 et 10 jours : poids corporel, consommation alimentaire, consommation d'eau, température corporelle et/ou consommation de dioxyde de carbone.

2. Procédé selon la revendication précédente, dans lequel la prédiction correspond à une période comprise entre 0 et 5 jours.

3. Procédé selon l'une quelconque des revendications précédentes, dans lequel un ou plusieurs volailles, vaches, moutons, agneaux, chèvres, porcs, chevaux, ânes ou mules sont fournis dans l'étape a).

4. Procédé selon la revendication précédente, dans lequel un ou plusieurs poulets de chair, poules reproductrices ou poussins sont fournis dans l'étape a).

5. Procédé selon l'une quelconque des revendications précédentes, dans lequel l'emplacement principal fourni dans l'étape b) comprend une ferme, une grange, une couveuse ou des moyens pour le transport des animaux.

6. Procédé selon la revendication précédente, dans lequel les moyens pour le transport des animaux comprennent un camion, un train, un bateau ou un avion.

**7.** Procédé selon l'une quelconque des revendications précédentes, comprenant en outre :

- fournir un emplacement secondaire pour l'animal/les animaux de bétail ;
- réaliser les étapes c) à i) dans ledit emplacement secondaire ;
- comparer l'état de bien-être de l'animal/des animaux de bétail dans les emplacements principal et secondaire.

**8.** Procédé selon l'une quelconque des revendications précédentes, dans lequel l'un ou plusieurs animaux de bétail fournis dans l'étape a) comprennent des oeuf fécondés, et dans lequel l'étape e) comprend la mesure d'un ou plusieurs signaux de vocalisation générés par les animaux de bétail avant ou après la naissance desdits animaux à partir des oeufs fécondés.

**9.** Procédé selon la revendication précédente, dans lequel l'emplacement principal fourni dans l'étape b) comprend un incubateur, et ledit procédé comprenant en outre les étapes suivantes :

- placer les oeufs fécondés à l'intérieur de l'incubateur ; et
- ouvrir l'incubateur en fonction de l'état de bien-être déterminé dans l'étape i).

**10.** Procédé selon l'une quelconque des revendications 8-9, dans lequel les oeufs fécondés comprennent des oeufs fécondés de poules de volaille.

**11.** Procédé selon l'une quelconque des revendications précédentes, dans lequel le dispositif de capteur d'audio fournis dans l'étape c) comprend un microphone ou des moyens d'enregistrement d'audio reliés à, ou comprenant, un microphone.

**12.** Procédé selon l'une quelconque des revendications précédentes, dans lequel ledit procédé comprend en outre :

- filtrer et/ou éliminer le bruit du signal/des signaux de vocalisation d'animal de bétail avant l'étape f) ; et/ou
- fournir un dispositif de capteur auxiliaire, configuré pour recevoir des donnés de concentration en dioxyde de carbone, humidité, concentration en ammoniaque, intensité lumineuse et/ou température de couleur à partir des emplacements principal et/ou secondaire ; et
- mesurer, avec le dispositif de capteur auxiliaire, la concentration en dioxyde de carbone, l'humidité, la concentration en ammoniaque, l'intensité lumineuse et/ou la température de couleur dans les emplacements principal et/ou secondaire.

**13.** Procédé selon l'une quelconque des revendications précédentes, dans lequel l'animal/les animaux de bétail fourni(s) dans l'étape a) est/sont sous traitement pharmacologique.

**14.** Système d'évaluation d'un état de bien-être d'un ou plusieurs animaux de bétail, ledit système comprenant :

- au moins un dispositif de capteur d'audio (1), configuré pour recevoir un ou plusieurs signaux audio de vocalisation émis par l'animal/les animaux de bétail dans un emplacement principal ;
- une unité de traitement de données (2), configurée pour traiter le signal/les signaux audio de vocalisation, dans lequel ladite unité de traitement de données comprend en outre :

- une base de données de signaux audio de vocalisation des animaux de bétail, indicative d'au moins un état de bien-être de référence ; et,
- des moyens matériels et/ou logiciels pour déterminer au moins un état de bien-être de l'animal/des animaux de bétail ;

et dans lequel le dispositif de capteur d'audio (1) et les moyens matériels et/ou logiciels de l'unité de traitement de données (2) sont adaptés en outre pour réaliser au moins les étapes e)-i) d'un procédé selon l'une quelconque des revendications 1-13.

**15.** Système selon la revendication précédente, comprenant en outre :

- un réseau de communication de données (9), relié à l'unité de traitement de données (2), dans lequel ledit réseau de communication de données (9) comprend en outre :

- un ou plusieurs terminaux de gestion (13), configurés pour réaliser un traitement postérieur additionnel ou gérer le signal/les signaux audio de vocalisation traité(s) par l'unité de traitement de données (2) ; et/ou

- un ou plusieurs terminaux d'utilisateur (14), configurés pour envoyer des instructions vers l'unité de traitement de données (2) et adaptés pour afficher et/ou télécharger l'indicateur/les indicateurs de productivité d'animal de bétail, la comparaison entre ledit indicateur/lesdits indicateurs et la base de données de l'unité de traitement de données (2), et/ou l'état de bien-être de l'animal/des animaux de bétail déterminé par l'unité de traitement de données (2) ;

et/ou

- un dispositif de capteur auxiliaire pour mesurer la concentration en dioxyde de carbone, l'humidité, la concentration en ammoniaque, l'intensité lumineuse et/ou la température de couleur dans le/les emplacement(s) principal et/ou secondaire.

**FIG. 1**

**FIG. 2**

FIG. 3a

FIG. 3b

FIG. 4a

FIG. 4b

FIG. 5a

FIG. 5b

**FIG. 6a**

**FIG. 6b**

FIG. 7a

FIG. 7b

**FIG. 8a**

**FIG. 8b**

FIG. 9a

FIG. 9b

**FIG. 10a**

**FIG. 10b**

**FIG. 10c**

FIG. 11

FIG. 12a

FIG. 12b

**FIG. 13**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2020165587 A1
- US 8915215 B1
- US 8297231 B2
- KR 20210067779 A

### Non-patent literature cited in the description

- **A. ZIEN et al.** Machine Learning and Knowledge Discovery in Databases. Springer Berlin Heidelberg, 2009, 694-709